# EUROPEAN PATENT SPECIFICATION

(11) **EP 3 634 795 B1**
(45) Date of publication and mention of the grant of the patent: **09.07.2025**
(21) Application number: 18801078.9
(22) Date of filing: 15.05.2018
(51) Int. Cl.: B60J 1/20

(54) **A SHADE ASSEMBLY USED IN VEHICLES**
IN FAHRZEUGEN VERWENDETE BLENDENANORDNUNG
ENSEMBLE STORE UTILISÉ DANS DES VÉHICULES

(30) Priority: 29.05.2017 TR 201707855
(43) Date of publication of application: 15.04.2020
(73) Proprietor: Al-Kor Makina Kalip Sanayi Ve Ticaret A.S., Arnavutkoy, 34555 Istanbul (TR)
(72) Inventor: DiVANYAN, Erol, Arnavutkoy/Istanbul (TR)
(74) Representative: Demirkiran, Hasan
(86) International application number: PCT/TR2018/000044
(87) International publication number: WO 2018/226189

(56) References cited:
- WO-A1-2016/084540
- WO-A1-2016/084540
- DE-U1- 202012 008 487
- DE-U1- 202012 008 487
- DE-U1- 202012 008 487
- JP-A- 2002 174 085
- JP-A- 2003 205 786
- JP-A- 2003 205 786
- JP-A- 2014 226 969
- US-A- 3 763 916
- US-A- 5 226 467
- US-A- 5 226 467

## Description

### TECHNICAL FIELD

The invention relates to a shade assembly which is used in vehicles and allows the shade to be retracted when it is released.

### STATE OF THE ART

In the state of the art, shade assemblies are known, which are used in vehicles and allow the shade to be retracted. In such shade assemblies, the number of parts in the mechanisms for retracting the shade is rather high, and hence its assembly is difficult and the cost of manufacture is high. Further, the costs are much higher in these mechanisms, in the case that the rotational movement required for retracting the shade is provided by drive members. Therefore, there is a need for solutions which have lesser parts, is easy to assembly and have reduced cost of manufacture such that the shade is enabled to retract in the vehicles.

Patent Application US 2016/0083998 discloses a roller shade assembly a cylindrical tube having an inner surface defining an axial bore; a spindle including an outer threaded portion defining a helical groove, the spindle being configured to be received in the axial bore of the cylindrical tube for axial movement in the cylindrical tube at one end of the cylindrical tube; and at least one tracking element operatively associated with the cylindrical tube, the at least one tracking element being configured for riding in the helical groove to convert axial rotation of cylindrical tube into axial movement of the cylindrical tube on the support tube. The tracking element engages the helical groove from a position proximal to one end of the cylindrical tube. The starting axial position of the cylindrical tube in relation to the support tube is configured to be adjustable by manually rotating the spindle without rotating the support tube.

Patent Application US5226467A discloses a wind-shield blind system to thermally insulate the windshield of a car. The system includes a spindle tube with a spindle tube mechanism which allows the blind to extend only, preventing the blind from being accidentally rewound by locking the spindle tube in a stationary position at any of a plurality of positions in its range of extension. The spindle tube mechanism includes a push block which, when activated, causes the blind to be automatically rewound.

Patent Application JP2014226969A discloses a sheet winding device and an assembling method of a sheet winding part capable of preventing or suppressing the occurrence of abnormal sound caused by the striking of a coil spring to a winding pipe via a silencer.

### SUMMARY OF THE INVENTION

The object of the invention is to provide a shade assembly which allows the shade to be retracted, has less number of parts and is easy to assembly.

Another object of the invention is to provide a shade assembly having a reduced cost of manufacture.

The invention is set out in the appended set of claims.

### BRIEF DESCRIPTION OF DRAWINGS

The following second assembly and further embodiment are not according to the invention and are present for illustration purposes only.
Figure 1 is an exploded view showing the first assembly.
Figure 2 is a representative view of a first cap in the first assembly.
Figure 3 is a sectional view of a first cap in the first assembly.
Figure 4 is a representative view of a guiding member in the first assembly.
Figure 5 is a sectional view of a guiding member in the first assembly.
Figure 6 is a representative view of a head in the first assembly.
Figure 7 is a top view of a head in the first assembly.
Figure 8 is a sectional view of a head in the first assembly.
Figure 9 is a top view of a spring in the first assembly.
Figure 10 is a front view of a spring in the first assembly.
Figure 11 is a representative view of a mounting member in the first assembly.
Figure 12 is a sectional view of a mounting member in the first assembly.
Figure 13 is a representative view of a second cap in the first assembly.
Figure 14 is a sectional view of a second cap in the first assembly.
Figure 15 is an exploded view showing the second assembly.
Figure 16 is a sectional view showing the second assembly.
Figure 17 is a front view of a second spring in the second assembly.
Figure 18 is a front view of a spring fixing member in the second assembly.
Figure 19 is a representative view of a spring fixing member in the second assembly.
Figure 20 is a representative view of a tube guiding member in the second assembly.
Figure 21 is a sectional view of a tube guiding member in the second assembly.
Figure 22 is a representative view of a third cap in the second assembly.
Figure 23 is a sectional view of a third cap in the second assembly.
Figure 24 is an exploded view showing a further embodiment of the invention.
Figure 25 is a sectional view showing mentioned further embodiment.
Figure 26 is a representative view of a fourth cap in said further embodiment.
Figure 27 is a sectional view of a fourth cap in the further embodiment.
Figure 28 is a representative view of a second mounting member in the further embodiment.
Figure 29 is another representative view of a second mounting member in the further embodiment.
Figure 30 is a sectional view of a second mounting member in the further embodiment.
Figure 31 is a representative view of a housing in the first and second assembly.
Figure 32 is a representative view of a tube in the first and second assembly.
Figure 33 is a front view of a tube in the first and second assembly.
Figure 34 is a front view showing a rod in the first assembly.
Figure 35 is a sectional view showing a rod in the first assembly.

### DETAILED DESCRIPTION OF THE INVENTION

In this detailed description, three different shade assemblies used in vehicles are described by way of examples only for better understanding the subject matter without limitation.

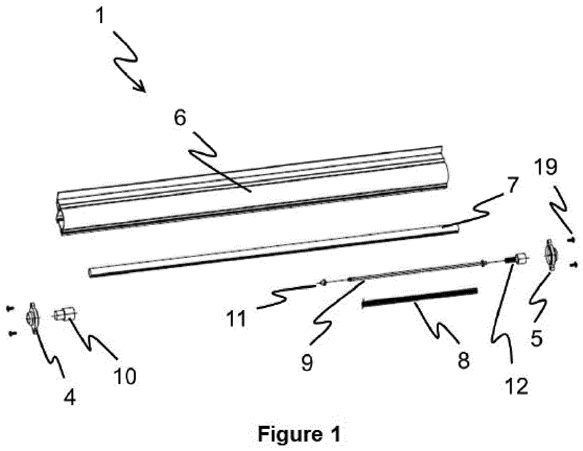

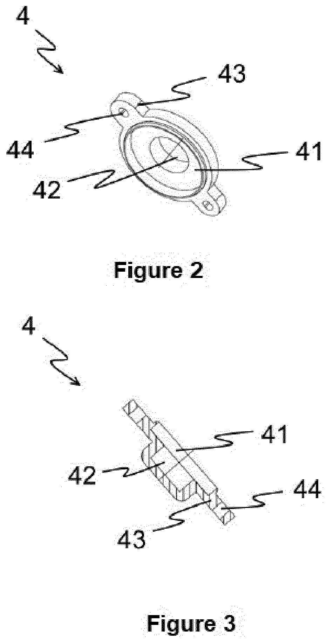

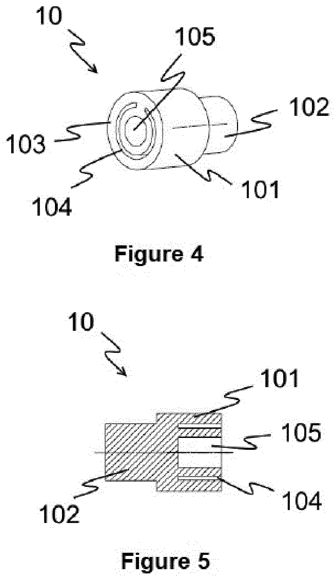

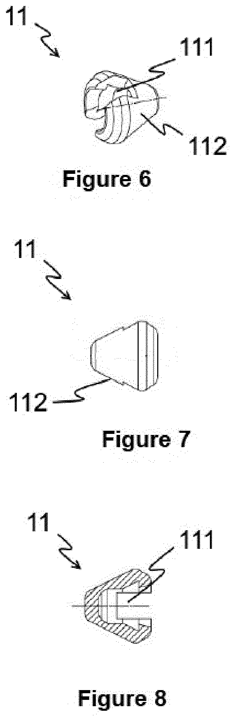

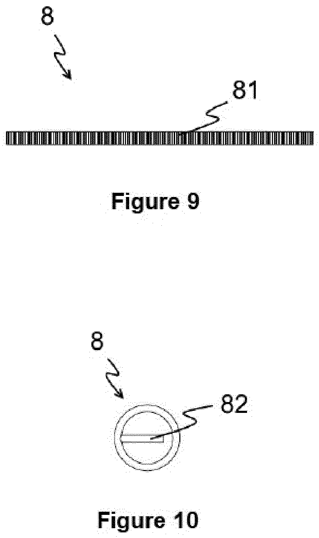

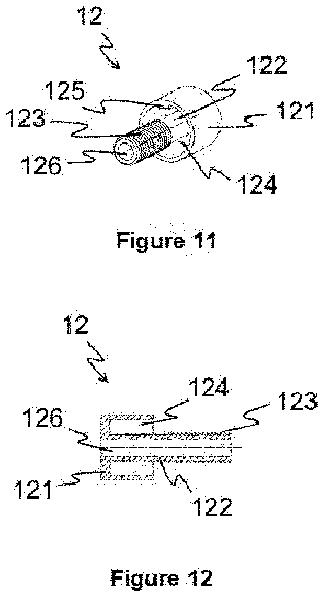

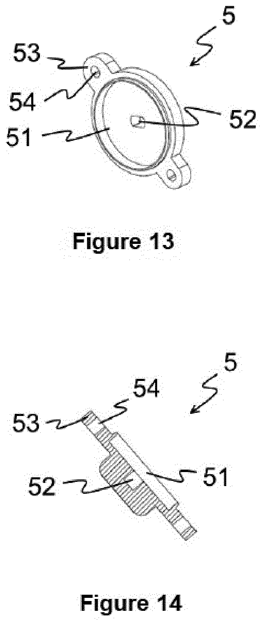

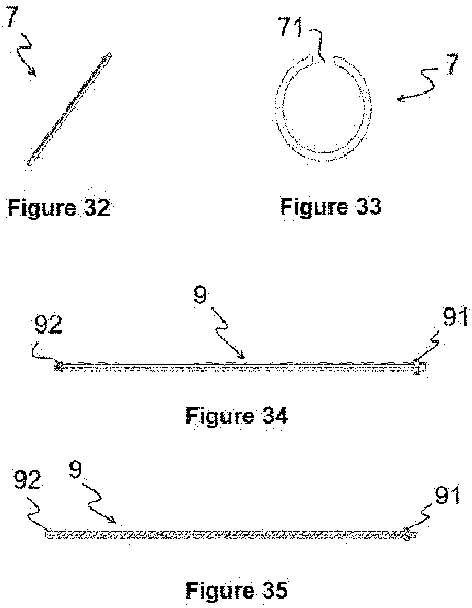

Figure 1 is an exploded view of a first assembly (1). The first assembly (1) generally has a tube (7) for winding a shade used in vehicles, a rod (9) disposed linearly within the tube (7), a first mounting member (12) through which said rod (9) is passed, a first spring (8) wound onto the rod (9), and opposing caps (4, 5) at which the ends of the tube (7) are located. A first cap (4) shown in the Figure 2 and Figure 3 has a geometrically cylindrical shape. A first cap recess (41) is present on the first cap (4). Said first cap recess (41) has a second cap groove (52). In a preferred embodiment, said first cap recess (41) and the second cap groove (52) is provided in the form of a circle. The first cap (4) has at least one cap flange (43) thereon, which is configured to be away from the cap. At least one connecting hole (44) is present on the first cap flange (43). Figure 4 and Figure 5 is representative and sectional views of a guiding member (10) in the first and second shade assembly. The guiding member (10) is generally cylindrical. The guiding member (10) is formed by a first body (101) and a second body (102), which have cylindrical shapes. In a more detailed embodiment, the guiding member (10) is formed by end-to-end joining the first body (101) and the second body (102), which have different diameters. A guiding member channel (104) is present on the front surface (103) of the first body (101) in the guiding member (10). In a preferred embodiment, said guiding member channel (104) has a "C" shape. Also, the first body (101) of the guiding member (104) has a guiding member hole (105). Figure 6, Figure 7 and Figure 8 shows a head (11) comprised in the first assembly (1). Said head (11) has a generally conical surface (102). A groove (111) is located at the middle of the head (11). Figure 9 and Figure 10 show a first spring (8) in the first assembly (1). The first spring (8) has a first helical portion (81) of a circular shape and a first hook portion (82) at both ends of the first helical portion (81). Figure 11 and Figure 12 are views of a first mounting member (12) in the first assembly (1). The first mounting member (12) comprises a first cylindrical mounting member body (121), a first mounting member recess (124) provided within said first mounting member body (121), and a spindle (122) extending horizontally away from the first mounting member (12) through the first mounting member recess (124). A first mounting member channel (126) extends through said spindle (122). A first grooved portion (123) is provided at one end of the spindle (122). A tab (125) is provided on an inner wall of the first mounting member body (121) facing the first mounting member recess (124). Said tab (125) is defined as an extension extending from the inner wall of the first mounting member body (121) to the spindle (122). Figure 13 and Figure 14 are views of a second cap (5) in the first assembly (1). The second cap (5) is cylindrical in shape. A second cap recess (51) is provided on the second cap (5). In a preferred embodiment, said second cap recess (51) is circular in shape. Said second cap recess (51) has a second cap groove (52). At least one second cap flange (53) configured to be away from the cap is provided on the second cap (5). At least one second connecting hole (54) is provided on the second cap flange (53). Figure 34 and Figure 35 are views of a circular linear rod (9) in the first assembly (1). A first protrusion (91) is provided proximal to one end of the rod (9). A second protrusion (92) is provided at the other end of the rod (9). Said second protrusion (92) is conical in shape.

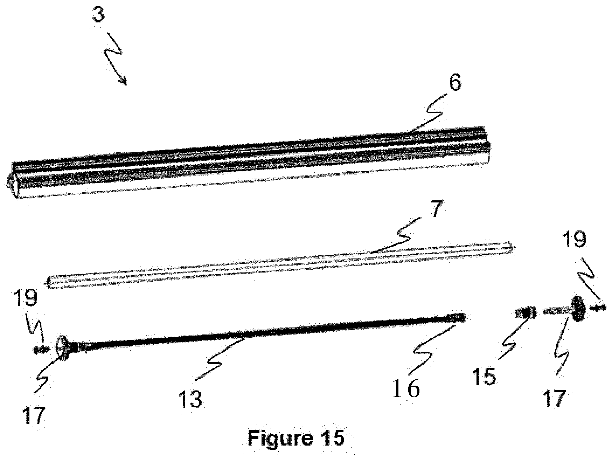

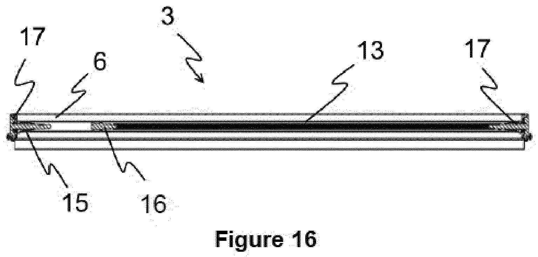

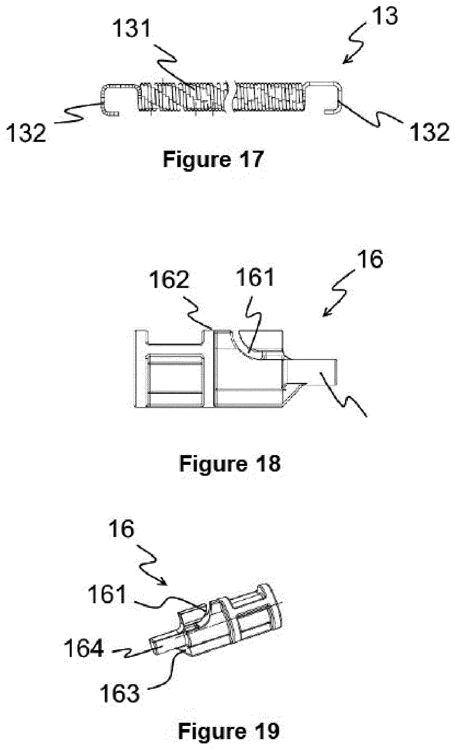

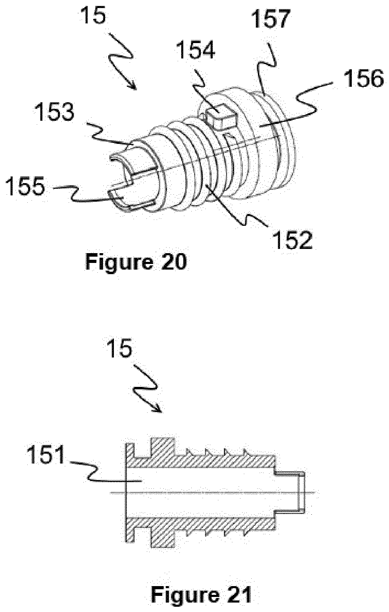

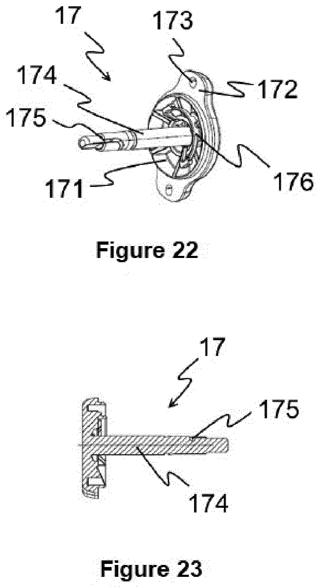

Figure 15 and Figure 16 are exploded and sectional views of a second assembly (3). The second assembly (3) comprises generally a tube (7) for winding a shade used in vehicles, a second spring (13) disposed linearly within the tube (7), a third cap (17) having an extension located at the opposing ends of the tube (7) and extending through the tube (7) and a spring fixing member (16) located fixedly within the tube (7) for fastening the second spring (13). The second spring (13) in the second assembly (3) shown in Figure 17 has a second circular helical portion (131) and at least one second hook portion (132) at both ends of the second helical portion (131). In a preferred embodiment, said second hook portion (132) has a "C" shape. Figure 18 and figure 19 are views of the spring fixing member (16). The spring fixing member (16) has a rectangular shape and has a first slot (161) thereon. In a preferred embodiment, said first slot (161) is inclined downwardly from an upper surface (162) of the spring fixing member (16). There is provided a second spindle (164) extending horizontally from a side surface (163) of the spring fixing member (16). Figure 20 and Figure 21 are views of a tube guiding member (15) in the second assembly (3). Said tube guiding member (15) has a circular shape. The tube guiding member (15) has a tube guiding member channel (151) therethrough and a second grooved portion (152) on a lateral surface (153) thereof. Also, said lateral surface (153) has a protrusion (154). The tube guiding member (15) has a tube guiding member extension (155) on one end thereof, and a first circular ridge (156) and a second circular ridge (157) on the other end thereof, in an opposite direction. Figure 22 and Figure 23 are views of a third cap (17) in the second assembly (3). The third cap (17) has generally a cylindrical shape. There is provided a third cap recess (171) on the third cap (17).

In a preferred embodiment, said third cap recess (171) is circular in shape. At least one third cap flange (172) configured to be away from the cap is provided on the third cap (17). At least one third connecting hole (173) is provided on the third cap flange (172). There is provided a third cap extension (174) configured to be away from the third cap recess (171) and a circular wall (176) in said third cap recess (171). In a preferred embodiment, said wall is provided in a "C" shape. Further, a second slot (175) is provided on the third cap extension (174).

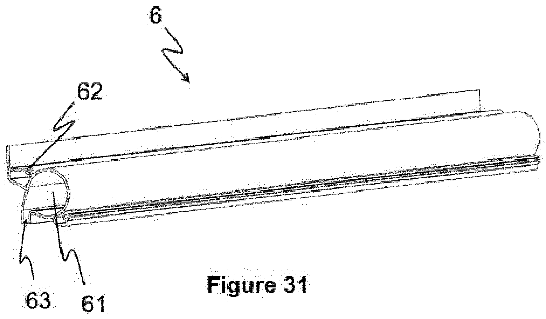

Figure 31 shows a housing (6) used in the first assembly (1) and second assembly (3). Said housing (6) has a housing channel (61) thereon in which the tube (7) is accommodated. In a preferred embodiment, said housing channel (61) is a hollow cylinder. Said housing channel (61) has a housing aperture (63) which communicates with outside and allows the shade to pass through.

Figure 32 shows views of the cylindrical tube (7) used in the first assembly (1) and second assembly (3). Said cylindrical tube (7) has a longitudinal aperture (71) thereon. In a more detailed embodiment, the tube (7) is in the form of "C" shape.

Assembly and operation of the first assembly (1) is as follows: The first spring (8) is wound onto the rod (9), and the first spring (8) is attached to the second protrusion (92) of the rod (9) from one side thereof and is fixed to the head (11). The first spring (8) is attached to the first grooved portion (123) from the other side thereof. The first protrusion (91) of the rod (9) is passed through the first mounting member channel (126). The rod (9) is disposed within the tube (7) along with the first spring (8) thereon. The rod (9) is placed in the second cap groove (52) of the second cap (5) from one side thereof such that it will not rotate and is positioned in the guiding member (10) from the other side thereof. The guiding member (10) is positioned in the first cap groove (42) of the first cap (4). One end of the tube (7) is located within the guiding member channel (104). The system thus mounted is placed in the housing channel (61) and fixed by at least one connecting member (19) through the connecting holes (44, 54) on the first cap (4) and second cap (5), and the housing hole (62). In the first assembly (1) thus mounted, energy is accumulated in the first spring (8) by the rotational movement of the tube (7). The energy accumulated in the first spring (8) is used to retract the shade by rotating the tube (7) in the opposite direction.

Assembly and operation of the second assembly (3) is as follows: The second spring is positioned between the spring fixing member (16) and the third cap (17) on the tube. The second spring (13) is fixed by being attached to the first slot (161) on the spring fixing member (16) from one end thereof and to the second slot (175) on the third cap (17) from the other end thereof. The tube guiding member (15) is provided at both ends of the tube (7) and the third cap extension (174) of the third cap (17) is passed through the tube guiding member channel (151). The protrusion (154) is located at the aperture of the tube. The tube (7) is located at the second slot (171) by the circular wall (176) from both ends thereof. The system thus mounted is placed in the housing channel (61) and fixed by at least one connecting member (19) through the third cap connecting holes (173) on the third caps (13), and the housing hole (62). In the first assembly (1) thus mounted, energy is accumulated in the second spring (13) by the rotational movement of the tube (7). The energy accumulated in the second spring (13) is used to retract the shade by rotating the tube (7) in the opposite direction.

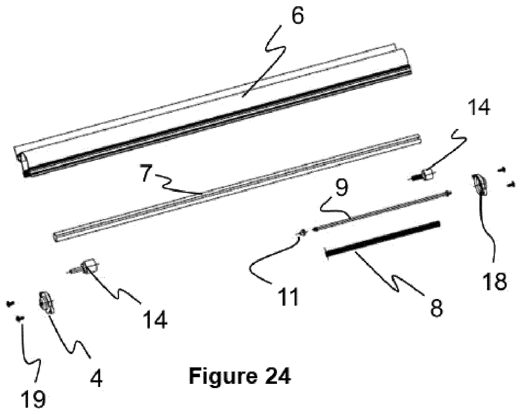

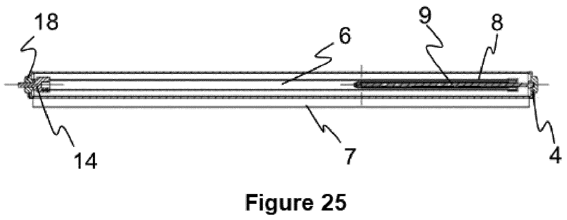

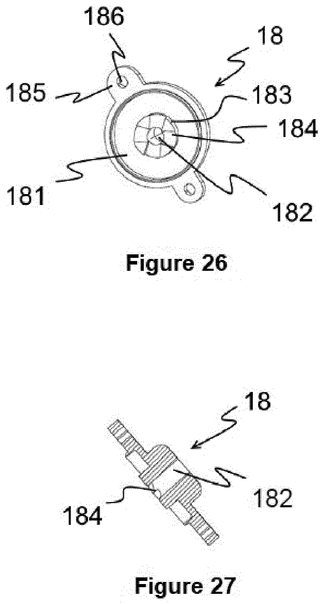

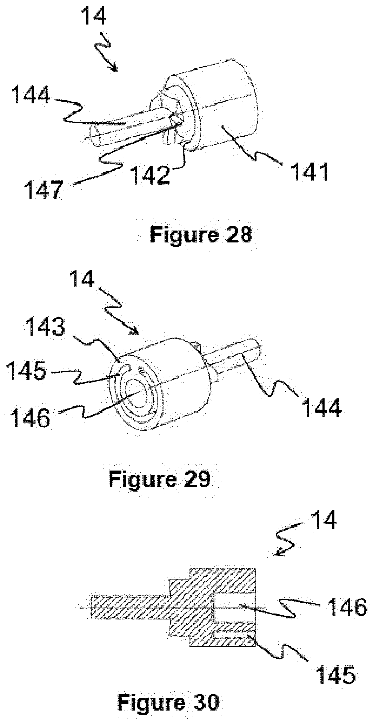

A further embodiment of the invention comprises generally a tube (7) for winding a shade, a rod (9) disposed linearly within the tube (7), a first mounting member (12) through which said rod (9) is passed, a first spring (8) wound onto the rod (9), and opposing first cap (4) and fourth cap (18) at which the ends of the tube (7) are located. Figure 24 is an exploded view of mentioned further embodiment of the invention and Figure 25 is an sectional view of said further embodiment. Figure 26 and Figure 27 are views of the fourth cap (18). The fourth cap (18) is cylindrical in shape. A fourth cap recess (181) is provided on the fourth cap (18). In a preferred embodiment, said fourth cap recess (181) is circular in shape. A circular ridge (183) is provided in said fourth cap recess (181). There is provided a fourth cap channel (182) extending along the fourth cap (18) from the ridge (183). In addition, a corresponding threaded portion (184) is provided on said ridge (183) on which a corresponding thread is present. At least one fourth cap flange (185) configured to be away from the cap is provided on the fourth cap (18). At least one fourth connecting hole (186) is provided on the fourth cap flange (185). Figure 28, Figure 29 and Figure 30 are views of the second mounting member (14) in the further embodiment of the invention. The second mounting member (14) comprises a second cylindrical mounting member body (141) and a threaded portion (147) with at least one thread provided on a first surface (142) of said second mounting member body (141). Said threaded portion (147) is configured to correspond to the threaded portion (184) on the fourth cap (18). In a more detailed embodiment, the threaded portion (147) and the corresponding threaded portion (184) are complementary to each other. On the other hand, there is provided an extension (144) extending horizontally away from the second mounting member (14) on the first surface (142). There is provided a second mounting member channel (145) on a second surface (143) corresponding to the first surface (142). In a preferred embodiment, said second mounting member channel (145) has a "C" shape. There is provided a hole (146) which is located on the second surface (143) of the second mounting member (14) and is extended along at least part of the second mounting member body (141).

Assembly and operation of the further embodiment of the invention is as follows: The first spring (8) is wound onto the rod (9), and the first spring (8) is attached to the second protrusion (92) of the rod (9) from one side thereof and is fixed to the head (11). The rod (9) is inserted into the hole (146) from the other side thereof, whereas one end of the tube (7) is positioned in the second mounting member channel (145). The extension (144) is passed through the fourth cap channel (182). In such case, threads of the corresponding threaded portion (184) and the threaded portion (147) are complementarily integrated. The rod (9) is disposed within the tube (7) along with the first spring (8) thereon. The rod (9) is passed through the fourth cap (18) from one side thereof such that it will not rotate and is positioned in the guiding member (10) from the other side thereof. The guiding member (10) is positioned in the first cap groove (42) of the first cap (4). The system thus mounted is placed in the housing channel (61) and fixed by at least one connecting member (19) through the connecting holes (44, 54) on the first cap (4) and fourth cap (18), and the housing hole (62). The corresponding threaded portion (184) and the threaded portion (147) are disengaged by a force applied linearly to the extension (144). In the first assembly (1) thus mounted, energy is accumulated in the first spring (8) by the rotational movement of the tube (7). The energy accumulated in the first spring (8) is used to retract the shade by rotating the tube (7) in the opposite direction.

### REFERENCE NUMERALS

1. First assembly
3. Second assembly
4. First cap
41. First cap recess
42. First cap groove
43. First cap flange
44. First connecting hole
5. Second cap
51. Second cap recess
52. Second cap groove
53. Second cap flange
54. Second connecting hole
6. Housing
61. Housing channel
62. Housing hole
63. Housing aperture
7. Tube
71. Aperture
8. First spring
81. First helical portion
82. First hook portion
9. Rod
91. First protrusion
92. Second protrusion
10. Guiding member
101. First body
102. Second body
103. Front surface
104. Guiding member channel
105. Guiding member hole
11. Head
111. Groove
112. Conical surface
12. First mounting member
121. First mounting member body
122. Spindle
123. First grooved portion
124. First mounting member recess
125. Tab
126. First mounting member channel
13. Second spring
131. Second helical portion
132. Second hook portion
14. Second mounting member
141. Second mounting member body
142. First surface
143. Second surface
144. Extension
145. Second mounting member channel
146. Hole
147. Threaded portion
15. Tube guiding member
151. Tube guiding member channel
152. Second grooved portion
153. Lateral surface
154. Protrusion
155. Tube guiding member extension
156. First circular ridge
157. Second circular ridge
16. Spring fixing member
161. First slot
162. Upper surface
163. Side surface
164. Second spindle
17. Third cap
171. Third cap recess
172. Third cap flange
173. Third connecting hole
174. Third cap extension
175. Second slot
176. Circular wall
18. Fourth cap
181. Fourth cap recess
182. Fourth cap channel
183. Ridge
184. Corresponding threaded portion
185. Fourth cap flange
186. Fourth connecting hole
19. Connecting member

## Claims

1. A shade assembly comprising a tube (7) for winding a shade used in vehicles, an aperture (71) extending longitudinally on the tube (7), a rod (9) disposed linearly within the tube (7), a first mounting member (12) through which the rod (9) is passed, a first spring (8) that has helical form wound onto the rod (9) and a first hook portion (82) formed on both ends of the first helical portion (81), and opposing first and second caps (4, 5) at which ends of the tube (7) are located, a first protrusion (91) which is formed on one end of the rod (9) and fixed to a second cap groove (52) of the second cap (5) by passing through a first mounting member channel (126) of the first mounting member (12), such that it prevents a rotational movement of the rod (9), a guiding member (10) which one end is located in a first cap groove (42) of the first cap (4) such that it allows a rotational movement of the tube (7), **characterized by** the shade assembly further comprising;
- a second protrusion (92) which is formed in conical shape on an other end of the rod (9), configured to receive the first hook portion (82), and a conical shaped head (11) configured to be placed onto the second protrusion (92),
- a first grooved portion (123) that is formed on the first mounting member (12) and configured to mount an other side of the first spring (8) to the first mounting member (12),
- the guiding member (10) comprising a guiding member channel (104) configured to receive one end of the tube (7).

2. The shade assembly according to claim 1, **characterized in that** the first mounting member (12) comprises a first mounting member (12) including a first mounting member recess (124) in which the tube is disposed and a tab (125) engaging a hole on the tube (7) on its side facing the tube (7).

3. The shade assembly according to anyone of preceding claims, **characterized by** comprising a housing (6) with a housing channel (61) for accommodating the tube (7) and a housing aperture (63) allowing the shade to pass therethrough.

4. The shade assembly according to claim 3, **characterized in that** the first and second caps (4, 5) have at least one connecting hole (44, 45), and wherein at least one housing hole (62) corresponding to the connecting hole (44, 45) is present on the housing (6), and wherein there is at least one connecting member (19) for fixing the first and second caps (4, 5) to the housing (6).

## Patentansprüche

1. Sonnenblendenanordnung mit einem Rohr (7) zum Aufwickeln einer Sonnenblende, die in Fahrzeugen verwendet wird, einer Öffnung (71), die sich in Längsrichtung auf dem Rohr (7) erstreckt, einer Stange (9), die linear innerhalb des Rohrs (7) angeordnet ist, einem ersten Befestigungselement (12), durch das die Stange (9) geführt wird, eine erste Feder (8), die schraubenförmig auf die Stange (9) gewickelt ist, und einen ersten Hakenabschnitt (82), der an beiden Enden des ersten schraubenförmigen Abschnitts (81) ausgebildet ist, sowie eine erste und eine zweite Kappe (4, 5), die einander gegenüberliegen und an denen die Enden des Rohrs (7) angeordnet sind, einen ersten Vorsprung (91), der an einem Ende der Stange (9) ausgebildet ist und an einer zweiten Kappennut (52) der zweiten Kappe (5) befestigt ist, indem er durch einen ersten Befestigungselementkanal (126) des ersten Befestigungselements (12) hindurchgeht, so dass er eine Drehbewegung der Stange (9) verhindert, ein Führungselement (10), dessen eines Ende in einer ersten Kappennut (42) der ersten Kappe (4) angeordnet ist, so dass es eine Drehbewegung des Rohrs (7) zulässt, **dadurch gekennzeichnet, dass** die Sonnenblendenanordnung ferner umfasst:
- einen zweiten Vorsprung (92), der in konischer Form an einem anderen Ende der Stange (9) ausgebildet ist und so konfiguriert ist, dass er den ersten Hakenabschnitt (82) aufnimmt, und einen konisch geformten Kopf (11), der so konfiguriert ist, dass er auf dem zweiten Vorsprung (92) platziert wird,
- einen ersten genuteten Abschnitt (123), der an dem ersten Befestigungselement (12) ausgebildet ist und so konfiguriert ist, dass er eine andere Seite der ersten Feder (8) an dem ersten Befestigungselement (12) befestigt,
- wobei das Führungselement (10) einen Führungselementkanal (104) umfasst, der zur Aufnahme eines Endes des Rohrs (7) konfiguriert ist.

2. Sonnenblendenanordnung nach Anspruch 1, **dadurch gekennzeichnet, dass** das erste Befestigungselement (12) ein erstes Befestigungselement (12) umfasst, dass eine erste Befestigungselementaussparung (124), in der das Rohr angeordnet ist, und eine Lasche (125) umfasst, die auf ihrer dem Rohr (7) zugewandten Seite in ein Loch am Rohr (7) eingreift.

3. Sonnenblendenanordnung nach einem der vorhergehenden Ansprüche, **dadurch gekennzeichnet, dass** sie ein Gehäuse (6) mit einem Gehäusekanal (61) zur Aufnahme des Rohrs (7) und einer Gehäuseöffnung (63) umfasst, durch die die Sonnenblende hindurchgeführt werden kann.

4. Sonnenblendenanordnung nach Anspruch 3, **dadurch gekennzeichnet, dass** die erste und die zweite Kappe (4, 5) mindestens ein Verbindungsloch (44, 45) aufweisen, und wobei am Gehäuse (6) mindestens ein dem Verbindungsloch (44, 45) entsprechendes Gehäuseloch (62) vorhanden ist, und wobei mindestens ein Verbindungselement (19) zur Befestigung der ersten und der zweiten Kappe (4, 5) am Gehäuse (6) vorhanden ist.

## Revendications

1. Un ensemble de store comprenant un tube (7) pour enrouler un store utilisé dans les véhicules, une ouverture (71) s'étendant longitudinalement sur le tube (7), une tige (9) disposée linéairement à l'intérieur du tube (7), un premier élément de montage (12) à travers lequel la tige (9) est passée, un premier ressort (8) qui a une forme hélicoïdale enroulée sur la tige (9) et une première portion de crochet (82) formée sur les deux extrémités de la première portion hélicoïdale (81), et les premiers et seconds capuchons opposés (4, 5) dans lesquels les extrémités du tube (7) sont situées, une première protubérance (91) formée à une extrémité de la tige (9) et fixée à une deuxième rainure de capuchon (52) du deuxième capuchon (5) en passant à travers un premier canal d'élément de montage (126) du premier élément de montage (12), de sorte qu'elle empêche un mouvement de rotation de la tige (9), un élément de guidage (10) dont une extrémité est située dans une première rainure de capuchon (42) du premier capuchon (4) de sorte qu'il permet un mouvement de rotation du tube (7), **caractérisé en ce que** l'ensemble de store comprend en outre ;
- une deuxième protubérance (92) qui est formée en forme conique sur une autre extrémité de la tige (9), configurée pour recevoir la première portion de crochet (82), et une tête de forme conique (11) configurée pour être placée sur la deuxième protubérance (92),
- une première partie rainurée (123) qui est formée sur le premier élément de montage (12) et configurée pour monter un autre côté du premier ressort (8) sur le premier élément de montage (12),
- l'élément de guidage (10) comprend un canal d'élément de guidage (104) configuré pour recevoir une extrémité du tube (7).

2. L'ensemble de store selon la revendication 1, **caractérisé en ce que** le premier élément de montage (12) comprend un premier élément de montage (12) incluant un première évidement d'élément de montage (124) dans laquelle le tube est disposé et une languette (125) s'engageant dans un trou sur le tube (7) sur son côté faisant face au tube (7).

3. L'ensemble de store selon l'une quelconque des revendications précédentes, **caractérisé en ce qu'**il comprend un boîtier (6) avec un canal de boîtier (61) pour loger le tube (7) et une ouverture de boîtier (63) permettant au store de passer à travers.

4. L'ensemble de store selon la revendication 3, **caractérisé en ce que** le premier et le second capuchons (4, 5) ont au moins un trou de connexion (44, 45), et dans lequel au moins un trou de boîtier (62) correspondant au trou de connexion (44, 45) est présent sur le boîtier (6), et dans lequel il y a au moins un élément de connexion (19) pour fixer le premier et le second capuchons (4, 5) sur le boîtier (6).
